# EUROPÄISCHE PATENTSCHRIFT

(11) **EP 3 762 628 B1**
(45) Veröffentlichungstag und Bekanntmachung des Hinweises auf die Patenterteilung: **19.06.2024**
(21) Anmeldenummer: 19712133.8
(22) Anmeldetag: 04.03.2019
(51) Int. Cl.: F16F 15/26, F16C 19/22, F16C 19/46, F16C 33/58

(54) **AUSGLEICHSWELLE**
BALANCING SHAFT
ARBRE D'ÉQUILIBRAGE

(30) Priorität: 07.03.2018 DE 102018105186
(43) Veröffentlichungstag der Anmeldung: 13.01.2021
(73) Patentinhaber: Schaeffler Technologies AG & Co. KG, 91074 Herzogenaurach (DE)
(72) Erfinder: KOCH, Sebastian, 91301 Forchheim (DE); DORN, Stefan, 96142 Hollfeld (DE)
(86) Internationale Anmeldenummer: PCT/DE2019/100190
(87) Internationale Veröffentlichungsnummer: WO 2019/170191

(56) Entgegenhaltungen:
- EP-A1- 2 065 603
- WO-A2-2011/012239
- DE-A1-102007 037 287
- DE-A1-102008 026 204

## Beschreibung

Die Erfindung betrifft eine Ausgleichswelle, umfassend eine Welle mit einem Lagerzapfen, der teil- oder vollumfänglich gegenüber Axialschultern von an den Lagerzapfen angrenzenden Wellenabschnitten radial zurückspringt, und ein auf dem Lagerzapfen angeordnetes Nadellager mit einem Außenring, der die Außenlaufbahn der Nadeln bildet.

Derartige Ausgleichswellen werden typischerweise in Massenausgleichsgetrieben von Brennkraftmaschinen eingesetzt, um die freien Massenkräfte und/oder -momente zu kompensieren.

Eine nadelgelagerte Welle mit radial zurückspringenden Lagerzapfen ist aus der Motortechnischen Zeitschrift MTZ 06/2008, S. 518-524 bekannt. Die Radiallagerung der Welle erfolgt mittels Nadellagern an zwei derartigen Lagerzapfen und am antriebseitigen Endabschnitt mittels eine Gleitlagers, das auch die Axiallagerung der Welle übernimmt. Diese Lageranordnung kann dahingehend nachteilig sein, dass sie mit drei Radiallagern statisch überbestimmt ist.

Die EP 2 065 603 A1 offenbart eine nadelgelagerte Nockenwelle, wobei zwecks Vereinfachung der Wellenmontage eine Verschiebung der Lageraußenringe gegenüber der Nockenwelle stark eingeschränkt ist.

Die WO2011012239 A2 offenbart eine Ausgleichswelle, die zweifach, durch Nadellager gelagert ist.

Der Erfindung liegt die Aufgabe zu Grunde, eine Ausgleichswelle mit konstruktiv verbesserter Lagerung anzugeben.

Diese Aufgabe wird dadurch gelöst, dass das Nadellager sowohl als Radiallager als auch als einziges Axiallager der Ausgleichswelle dient, wobei der Außenring mit Axialschultern versehen ist und die Nadeln sowohl an den Axialschultern der Wellenabschnitte als auch an den Axialschultern des Außenrings in beide Axialrichtungen abgestützt sind. Bei dieser konstruktiven Ausgestaltung dient das Nadellager nicht nur als Radiallager, sondern auch als Axiallager der Welle, so dass mit einer zum Nadellager separaten Axiallagerstelle die statische Überbestimmtheit der Lageranordnung bei entsprechenden Bauraum- und/oder Bauteilkostenvorteilen entfällt.

Die Abstützung der Nadeln an den Axialschultern der Wellenabschnitte und/oder an den Axialschultern des Außenrings kann entweder mittelbar über einen die Nadeln halternden Käfig oder im unmittelbaren axialen Anlauf der Nadeln gegen die Axialschultern erfolgen.

Weitere Merkmale und Ausgestaltungen der Erfindung ergeben sich aus der nachfolgenden Beschreibung und aus den Zeichnungen, in denen ein Ausführungsbeispiel einer erfindungsgemäßen Ausgleichswelle dargestellt ist. Es zeigen:
- Figur 1: die Ausgleichswelle in perspektivischer Darstellung mit montierten Nadellagern;
- Figur 2: die Welle gemäß Figur 1 in perspektivischer Darstellung;
- Figur 3: die Axial-Radial-Lagerstelle der Ausgleichswelle gemäß Figur 1 als Einzelheit im Längsschnitt;
- Figur 4: das Axial-Radiallager gemäß Figur 3 als isoliertes Einzelteil.

Die Figuren zeigen eine Ausgleichswelle 1 für ein Massenausgleichsgetriebe, das zum Ausgleich der freien Massenkräfte und -momente zweiter Ordnung einer Brennkraftmaschine in Vierzylinder-Reihenbauweise dient. Der Antrieb der Ausgleichswelle erfolgt mittels eines - in der Darstellung noch nicht montierten - Ketten- oder Zahnrads am antriebseitigen Endabschnitt 2.

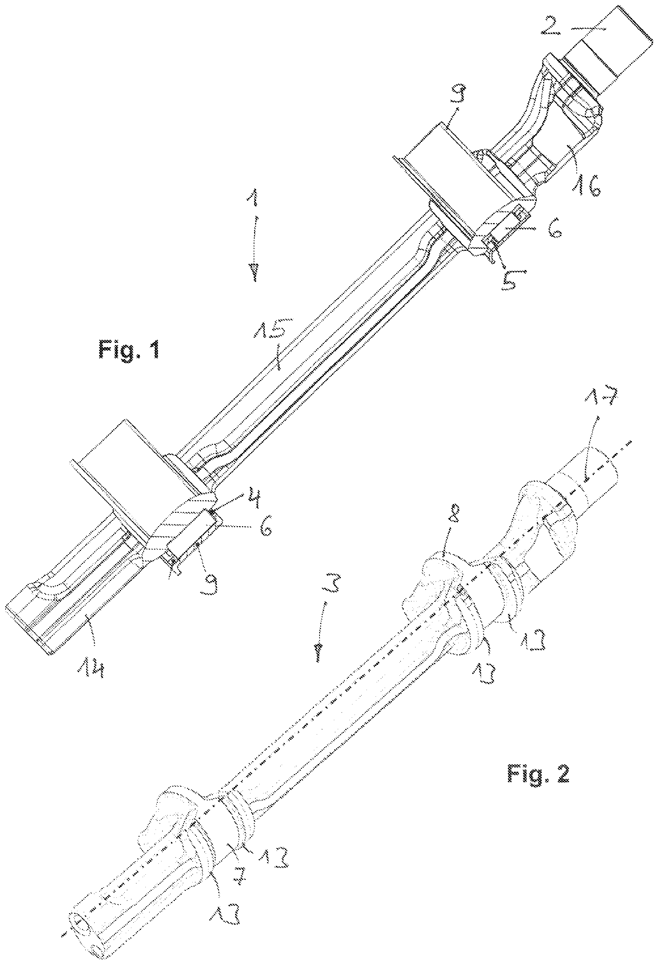

Die Ausgleichswelle 1 umfasst die in Figur 2 als Einzelteil dargestellte Welle 3 und zwei als Nadellager 4 und 5 ausgebildete Radiallager, deren Nadeln 6 auf zugehörigen Lagerzapfen 7 und 8 der Welle 3 unmittelbar abwälzen. Die Außenlaufbahnen der Nadeln 6 sind jeweils durch einen Außenring 9 gebildet, der in einem Gehäuse 10 der Brennkraftmaschine befestigt ist. Die axiale Positionierung des Außenrings 9 in der Lagerbohrung 11 des Gehäuses 10 erfolgt mittels eines sich radial auswärts erstreckenden Bunds 12, mit dem der Außenring 9 stirnseitig am Gehäuse 10 anschlägt. Jeder Lagerzapfen 7, 8 springt gegenüber Axialschultern 13 der daran angrenzenden Wellenabschnitte 14, 15 und 16 radial teilumfänglich zurück. Der Teilumfang beträgt etwa 200° und verläuft seitens der Unwucht spiegelsymmetrisch zur Unwuchtebene, die durch die Drehachse 17 der Welle 3 und ihren dazu exzentrischen Massenschwerpunkt aufgespannt wird.

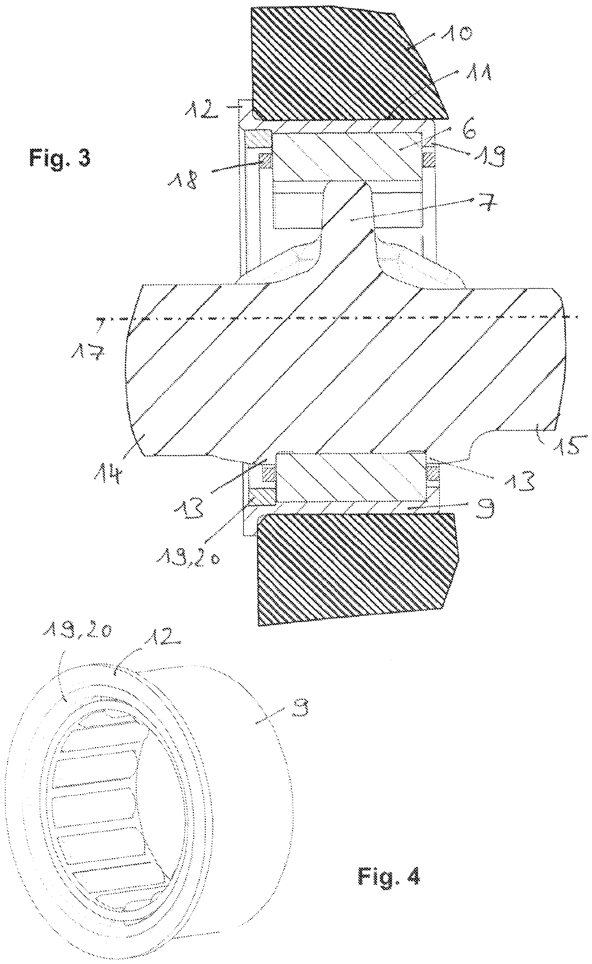

Im dargestellten Ausführungsbeispiel dient der in den Figuren linke Lagerzapfen 7 sowohl als Radiallager als auch als Axiallager. Dies sei nachfolgend anhand Figur 3, die die Axial-Radial-Lagerstelle der Ausgleichswelle 1 vergrößert zeigt, näher erläutert. Die Axialschultern 13 fassen die in einem Käfig 18 geführten Nadeln 6 mit Axialspiel ein, wobei die Stirnseiten der Nadeln 6 infolge Axialschubs der Welle 3 gegen deren Axialschultern 13 anlaufen. Der Außenring 9 ist mit Axialschultern 19 versehen, die ebenfalls in beide Axialrichtungen als Anlaufflächen für die Stirnseiten der Nadeln 6 dienen. Damit ist die Welle 3 über den axialen Kraftfluss Axialschultern 13 der Wellenabschnitte 14 und 15 - Nadeln 6 - Axialschultern 19 des Außenrings 9 mit vorgegebenem Axialspiel im Gehäuse 10 gelagert.

Die in den Figuren 3 und 4 linke Axialschulter 19 des Außenrings 9 ist zwecks Montage der kombinierten Axial-Radial-Lagerstelle durch einen Stützring 20 gebildet, der mit dem Außenring 9 an einer Position gefügt ist, in der der Stützring 20 axial mit dem Bund 12 des Außenrings 9 überlappt. Bei der Montage wird zunächst der Nadelkranz mit dem umfänglich geschlitzten Käfig 18 auf den Lagerzapfen 7 gesetzt, und daraufhin wird der Außenring 9 axial auf den Nadelkranz aufgeschoben. Anschließend wird der Stützring 20 in den Außenring 9 eingepresst. Figur 4 zeigt das auf diese Weise fertig montierte Axial-Radiallager als isoliertes Einzelteil.

Die radiale und axiale Lagerung der Welle 3 erfolgt lediglich an den beiden Lagerzapfen 7 und 8. Im dargestellten Ausführungsbeispiel ist die Axial-Radial-Lagerstelle über die beiden Wellenabschnitte 15, 16 und den Lagerzapfen 8 mit dem antriebseitigen Endabschnitt 2 verbunden. Alternativ kann der in Figur 1 rechte Lagerzapfen 8 die Axial-Radial-Lagerstelle bilden, die dann nur über den Wellenabschnitt 16 mit dem antriebseitigen Endabschnitt 2 verbunden ist.

### Liste der Bezugszahlen

- 1: Ausgleichswelle
- 2: antriebseitiger Endabschnitt
- 3: Welle
- 4: Nadellager
- 5: Nadellager
- 6: Nadel
- 7: Lagerzapfen
- 8: Lagerzapfen
- 9: Außenring
- 10: Gehäuse
- 11: Lagebohrung
- 12: Bund
- 13: Axialschulter eines Wellenabschnitts
- 14: Wellenabschnitt
- 15: Wellenabschnitt
- 16: Wellenabschnitt
- 17: Drehachse
- 18: Käfig
- 19: Axialschulter des Außenrings
- 20: Stützring

## Patentansprüche

1. Ausgleichswelle (1), umfassend eine Welle (3) mit einem Lagerzapfen (7), der teil- oder vollumfänglich gegenüber Axialschultern (13) von an den Lagerzapfen (7) angrenzenden Wellenabschnitten (14, 15) radial zurückspringt, und ein auf dem Lagerzapfen (7) angeordnetes Nadellager (4) mit einem Außenring (9), der die Außenlaufbahn der Nadeln (6) bildet, **dadurch gekennzeichnet, dass** das Nadellager (4) sowohl als Radiallager als auch als einziges Axiallager der Ausgleichswelle (1) dient, wobei der Außenring (9) mit Axialschultern (19) versehen ist und die Nadeln (6) sowohl an den Axialschultern (13) der Wellenabschnitte (14, 15) als auch an den Axialschultern (19) des Außenrings (9) in beide Axialrichtungen abgestützt sind.

2. Ausgleichswelle (1) nach Anspruch 1, **dadurch gekennzeichnet, dass** die Nadeln (6) jeweils unmittelbar an den Axialschultern (13) der Wellenabschnitte (14, 15) und an den Axialschultern (19) des Außenrings (9) axial anlaufen.

3. Ausgleichswelle (1) nach Anspruch 1 oder 2, **dadurch gekennzeichnet, dass** eine der Axialschultern (19) des Außenrings (9) durch einen mit dem Außenring gefügten Stützring (20) gebildet ist.

4. Ausgleichswelle (1) nach Anspruch 3, **dadurch gekennzeichnet, dass** der Außenring (9) mit einem Bund (12) versehen ist, der sich axial mit dem Stützring (9) überlappend in radial auswärtiger Richtung erstreckt.

## Claims

1. A balancing shaft (1), comprising a shaft (3) having a bearing journal (7), which, over part of or the whole circumference, is radially set back with respect to axial shoulders (13) of shaft sections (14, 15) adjacent to the bearing journal (7), and a needle bearing (4), which is arranged on the bearing journal (7) and has an outer ring (9), which forms the outer raceway of the needles (6), **characterised in that** the needle bearing (4) serves both as a radial bearing and as the only axial bearing of the balancing shaft (1), wherein the outer ring (9) is provided with axial shoulders (19) and the needles (6) are supported both on the axial shoulders (13) of the shaft sections (14, 15) and on the axial shoulders (19) of the outer ring (9) in both axial directions.

2. The balancing shaft (1) according to claim 1, **characterised in that** the needles (6) run axially directly against the axial shoulders (13) of the shaft sections (14, 15) and against the axial shoulders (19) of the outer ring (9).

3. The balancing shaft (1) according to claim 1 or 2, **characterised in that** one of the axial shoulders (19) of the outer ring (9) is formed by a support ring (20) joined to the outer ring.

4. The balancing shaft (1) according to claim 3, **characterised in that** the outer ring (9) is provided with a collar (12) that extends axially overlapping with the support ring (9) in a radially outward direction.

## Revendications

1. Arbre d'équilibrage (1), comprenant un arbre (3) comportant un tourillon (7), qui se situe en retrait radialement, sur une partie ou sur toute la périphérie, par rapport à des épaulements axiaux (13) de sections d'arbre (14, 15) adjacentes au tourillon (7) et un roulement à aiguilles (4) agencé sur le tourillon (7) comportant une bague externe (9), qui forme le chemin de roulement externe des aiguilles (6), **caractérisé en ce que** le roulement à aiguilles (4) sert aussi bien de roulement radial que de roulement axial unique de l'arbre d'équilibrage (1), dans lequel la bague externe (9) est dotée d'épaulements axiaux (19) et les aiguilles (6) sont en appui aussi bien sur les épaulements axiaux (13) des sections d'arbre (14, 15) que sur les épaulements axiaux (19) de la bague externe (9) dans les deux directions axiales.

2. Arbre d'équilibrage (1) selon la revendication 1, **caractérisé en ce que** les aiguilles (6) partent respectivement directement sur les épaulements axiaux (13) des sections d'arbre (14, 15) et sur les épaulements axiaux (19) de la bague externe (9).

3. Arbre d'équilibrage (1) selon la revendication 1 ou 2, **caractérisé en ce qu'un** des épaulements axiaux (19) de la bague externe (9) est formé par une bague d'appui (20) assemblée avec la bague externe.

4. Arbre d'équilibrage (1) selon la revendication 3, **caractérisé en ce que** la bague externe (9) est dotée d'une collerette (12), qui s'étend axialement en chevauchant la bague d'appui (9) dans la direction radialement vers l'extérieur.
